# EUROPÄISCHE PATENTSCHRIFT

(11) **EP 0 310 759 B1**
(45) Veröffentlichungstag und Bekanntmachung des Hinweises auf die Patenterteilung: **16.06.1993**
(21) Anmeldenummer: 88111356.7
(22) Anmeldetag: 14.07.1988
(51) Int. Cl.: H04L 12/56, H04Q 11/04, H04Q 3/68

(54) **Sortiereinheit für einen Vermittlungsknoten mit einer Vielzahl von digitalen Koppelfeldern für schnelle, asynchrone Datenpaketvermittlungsnetze**
Sorting unit for a switching node with multiple digital switches for fast asynchronous data switching networks
Opérateur de tri pour noeud de commutation avec une pluralité de champs de connexion numériques pour réseaux rapides de commutation asynchrone par paquets

(30) Priorität: 30.09.1987 DE 3733068
(43) Veröffentlichungstag der Anmeldung: 12.04.1989
(73) Patentinhaber: SIEMENS AKTIENGESELLSCHAFT, 80333 München (DE)
(72) Erfinder: Lobjinski, Manfred, Dr., D-8000 München 80 (DE); Horn, Michael, Dipl.-Math., D-8000 München 90 (DE); Reppekus, Andreas, Dipl.-Ing., D-8000 München 90 (DE)

(56) Entgegenhaltungen:
- WO-A-84/04015
- INTERNATIONAL SWITCHING SYMPOSIUM 1987 Phoenix,Arizona USA März 1987, IEEE New York,US Seiten 519 - 523; C.DAY et al.: "APPLICATIONS OF SELF-ROUTING SWITCHES TO LATA FIBER OPTIC NETWORKS"

## Beschreibung

Die vorliegende Erfindung bezieht sich auf eine Sortier-Einheit für einen Vermittlungsknoten mit einer Vielzahl von digitalen Koppelfeldern für schnelle, asynchrone Datenpaketvermittlungsnetze, wobei der Vermittlungsknoten eine mehrstufige, gemischte Verbindungsstruktur, beispielsweise nach Art einer sog. Banyan-Baumstruktur, aufweist, die ein vollkommenes Bündel bildet, nämlich derart, daß jeder Eingang des Vermittlungsknotens mit jedem Ausgang desselben verbindbar ist.

Im zukünftigen sog. Breitband-ISDN (Integrated Switching Digital Network) sollen neben den klassischen Anwendungen "Fernsprechen" und "Schmalband-Datenübertragung" auch Dienste wie "Bildfernsprechen", "Videokonferenz" und eine Datenkommunikation mit hoher Bitrate integriert sein. Damit ergibt sich die Notwendigkeit für unterschiedliche Kanäle mit unterschiedlicher Bitrate, wie 64 kBit/s für das Fernsprechen und 2-10 MBit/s für "Bildfernsprechen" und "Videokonferenz".

Bei der Datenkommunikation sind auch Datenströme mit Bitraten von 2-10 MBit/s zu vermitteln, die jedoch schubweise auftreten (Burstbetrieb) und so große Lücken aufweisen, daß hierfür die physikalische Durchschaltung in einem Leitungszug sehr ineffektiv ist. Die Übertragungs- und Vermittlungseinrichtungen würden dabei nämlich nur schwach genutzt, müßten jedoch reserviert bleiben.

Es sind deshalb für die Vermittlung der Datenanwendungen mit hoher Bitrate Paketvermittlungen (Fast Packet Switch) geplant, die im Gegensatz zum heutigen "Datex-P-Netz" schneller und mit einfacheren Protokollen arbeiten. Diese Vermittlungen, die Datenströme hoher Bitrate ohne Zwischensicherung durchschalten, sind auch zur Vermittlung der anderen Anwendungen geeignet und erschließen damit den Weg zu einer tatsächlichen Integration unterschiedlicher Kommunikationsanwendungen in einem gemeinsamen Netz.

Der "Fast Packet"-Vermittlungsknoten soll wegen der hohen Verarbeitungsleistung aus dezentral arbeitenden Komponenten aufgebaut sein, die in einer mehrstufigen Anordnung die Struktur eines Knotens bilden. Mögliche Strukturen sind von einem einfachen sog. Banyan-Netz abgeleitet und unterscheiden sich in der Weise, in der innere Blockierungen verringert oder vermieden werden. Es wird generell zwischen paketsynchronen und paketasynchronen Vermittlungsknoten unterschieden. Während synchrone, blockierungsfreie Vermittlungsknoten aus der Literatur bekannt sind, ist das Problem der inneren Blockierungen bei asynchronen Verfahren bisher noch nicht befriedigend gelöst.

Die Erfindung beschreibt einen asynchronen Vermittlungsknoten mit geringer Blockierungswahrscheinlichkeit und einer Übertragungsrate von 40 MBit/s pro Leitung.

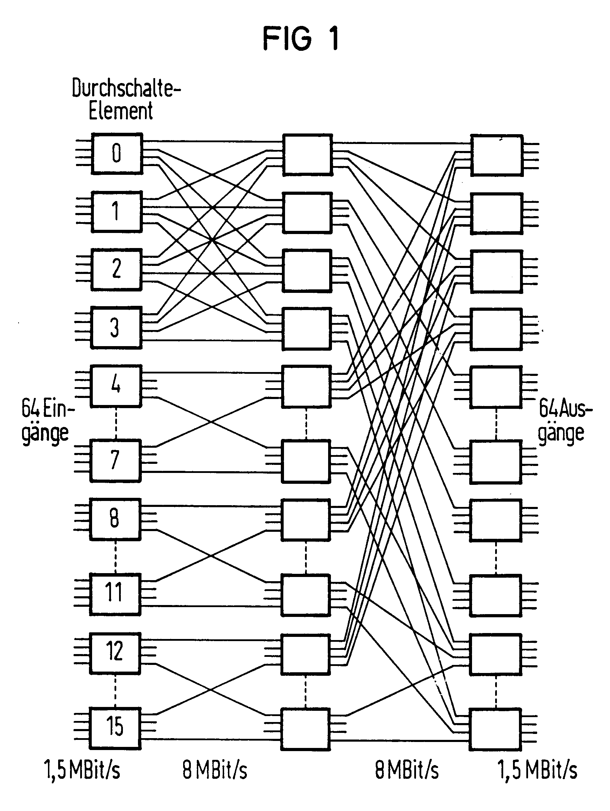

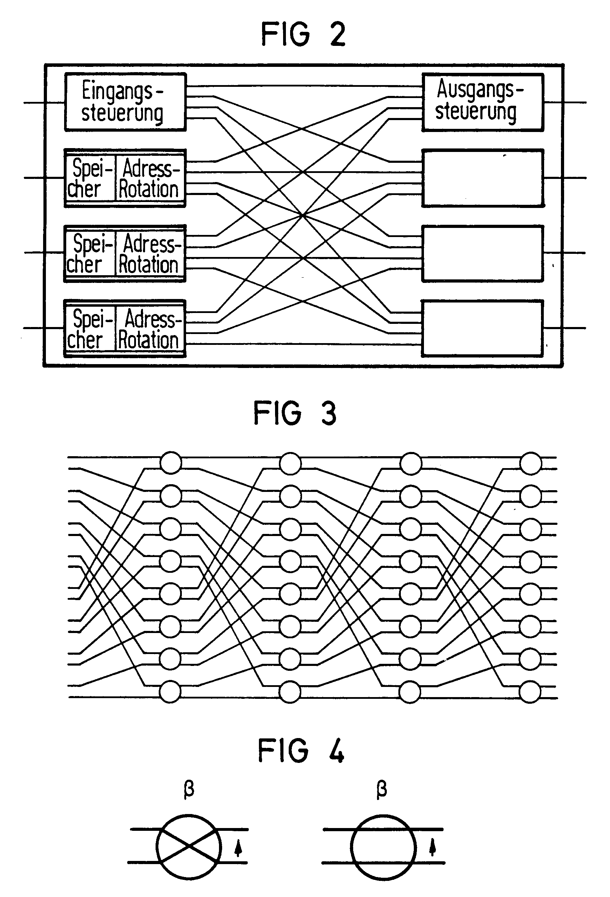

Ein asynchrones System zur Paketvermittlung ist bereits aus der US-A-4 491 945 bekannt. Dieses bekannte System besteht aus Vermittlungen mit 64 Eingängen zu je 1,5 MBit/s Datenrate (= 24 Sprachkanäle pro Eingangsleitung). Der Aufbau einer solchen Vermittlung ist in Fig. 1 gezeigt. Sie besteht aus drei Spalten von Durchschaltelementen mit je 4 Ein- und Ausgängen, die so verdrahtet sind, daß jeder Eingang mit jedem Ausgang verbunden werden kann (Perfect Shuffle). Jedes Durchschaltelement enthält 4 Eingangs- und Ausgangssteuerungen (vergl. Fig. 2), die auch durch eine "Perfect Shuffle"-Verbindungsstruktur verbunden sind. Für die korrekte Vermittlung innerhalb eines Durchschaltelements werden 2 Adreßbits benötigt. Innere Blockierungen werden durch die Erhöhung der internen Verarbeitungsgeschwindigkeit von 1,5 MBit/s auf 8 MBit/s vermieden. Auf den internen, höher belasteten Leitungen (vergl. Fig. 1), wird ein Betrieb mit "Zeitmultiplex"(Time Division Multiplex) angewandt. Ein ankommendes Datenpaket wird in dem Durchschaltelement zunächst zwischengespeichert, allerdings nur so lange, bis von dem nächsten Durchschaltelement, zu dem das Paket geleitet werden soll, eine Freimeldung kommt. Wegen der Blockierungsgefahr kann auf diese Zwischenspeicherung nicht verzichtet werden.

Der Verbindungsaufbau geschieht in diesem bekannten System durch Zentralprozessoren, die auch die Übersetzung der logischen in die für die Vermittlung nötigen physikalischen Adressen veranlassen. Die Kapazität eines derartigen Vermittlungsknotens beträgt 64*1,544 MBit/s 100 MBit/s.

Der vorliegenden Erfindung liegt die Aufgabe zugrunde, eine Sortiereinheit für einen Vermittlungsknoten der eingangs genannten Art zu schaffen, mit deren Hilfe es möglich ist, die Blockierungswahrscheinlichkeit innerhalb des Vermittlungsknotens im Vergleich zu derjenigen in bekannten Systemen der genannten Art herabzusetzen.

Die der Erfindung zugrundeliegende Aufgabe wird durch eine Sortiereinheit der eingangs genannten Art und gemäß dem Oberbegriff des Patentanspruchs 1 gelöst, die erfindungsgemäß durch die in dem kennzeichnenden Teil des Patentanspruchs 1 angegebenen Merkmale charaktierisiert ist.

Eine vorteilhafte Weiterbildung der Erfindung ist durch die Merkmale des Unteranspruchs gekennzeichnet.

Im folgenden wird die Erfindung anhand mehrerer Figuren im einzelnen beschrieben.
- Fig. 1: zeigt den prinzipiellen Aufbau eines bekannten Vermittlungsknotens.
- Fig. 2: zeigt blockschaltbildmäßig den inneren Aufbau eines Durchschaltelementes des Vermittlungsknotens gemäß Fig. 1.
- Fig. 3: zeigt die Struktur eines an sich bekannten sog. Banyan-Netzwerks.
- Fig. 4: zeigt schematisch in zwei Teildarstellungen ein sog. Beta-Element mit seinen zwei möglichen Schaltstellungen.
- Fig. 5: zeigt ein Diagramm mit einer Kurvenschar betreffend die Blockierungswahrscheinlichkeit einer Sortiereinheit mit 2 m Eingangsleitungen.
- Fig. 6: zeigt schematisch einen Vermittlungsknoten mit Sortiereinheiten anstelle von Beta-Elementen (n = 5, m = 4 m).
- Fig. 7: zeigt blockschaltbildmäßig eine Sortiereinheit einer letzten Beta-Elementen-Spalte gemäß Fig. 6 mit 8 Ein- und Ausgangsleitungen (m = 4).
- Fig. 8: zeigt eine Darstellung sog. "zusammengehörender" Beta-Elemente,
- Fig. 9: zeigt eine Darstellung sog. "zusammengehörender" Beta-Elemente mit eingetragenen Pfeilen für Vorzugs-Durchschaltrichtungen.
- Fig. 10: zeigt eine Darstellung, aus der "Bewegungen "leerer und "voller" Beta-Elemente hervorgehen.
- Fig. 11: zeigt die Struktur eines Vermittlungsknotens für 16 Leitungen.
- Fig. 12: zeigt die Struktur eines Vermittlungsknotens mit 2 m = 8 Eingangsleitungen und 2 m - 1 = 7 Beta-Elemente-Spalten.

Der Erfindung liegt ein Banyan-Netzwerk zugrunde. Ein Banyan-Netzwerk ist ein selbstgesteuerter (self-routing) Vermittlungsknoten mit 2ⁿ Ein- und Ausgangsleitungen und der Eigenschaft, daß jeder Ausgang von jedem Eingang aus erreichbar ist. Das Banyan-Netzwerk besteht aus n "Perfect Shuffle"- und n Beta-Element-Spalten, die abwechselnd aneinandergereiht sind, vergl. Fig. 3.

Unter einem "Shuffle" versteht man die Verbindung der Ausgänge einer Beta-Element-Spalte mit den Eingängen der nächsten Beta-Elemente-Spalte in folgender definierter Weise. Der erste, zweite, dritte,... Ausgang ist mit dem ersten, dritten, fünften,... Eingang und der 2ⁿ⁻¹ + 1,2ⁿ⁻¹ + 2, 2ⁿ⁻¹+ 3,.. Ausgang wird mit dem zweiten, vierten, sechsten,.. Eingang der nächsten Beta-Element-Spalte verbunden.

Ein Beta-Element ist ein Baustein mit zwei Ein- und Ausgangsleitungen und einer Voreinstellung, die durch einen Pfeil gekennzeichnet ist. Die Ein- und Ausgänge können im Beta-Element parallel oder über kreuz miteinander verbunden werden, vergl. Fig. 4. Das freie Beta-Element wird dabei von dem ersten Bit eines Pakets gesteuert. Ist das erste Bit eine "1", so wird das Paket in Pfeilrichtung, sonst gegen Pfeilrichtung weitergeleitet. Trifft ein Paket auf ein Beta-Element, das bereits ein anderes Paket weiterleitet, so wird es unabhängig von Bit und Pfeilrichtung auf den freien Ausgang weitergeleitet.

Die Daten werden in dem Banyan-Netzwerk folgendermaßen vermittelt:
Den Daten wird eine Kopfinformation (Header) mit n Adreßbits vorangestellt. Die Adreßbits entsprechen gerade der Nummer der gewünschten Ausgangsleitung in binärer Darstellung. In jedem Beta-Element wird genau ein Bit der Adresse ausgewertet und vernichtet. Der Weg eines Datenstroms zum gewünschten Ausgang ist im Banyan-Netzwerk eindeutig. Sollen zwei oder mehrere Datenströme gleichzeitig vermittelt werden, so werden möglicherweise Teilstücke der Leitungen im Banyan-Netzwerk von mehreren Datenströmen gleichzeitig beansprucht. Da jede Leitung aber nur für einen Datenstrom ausgelegt ist, werden die anderen Datenströme blockiert.

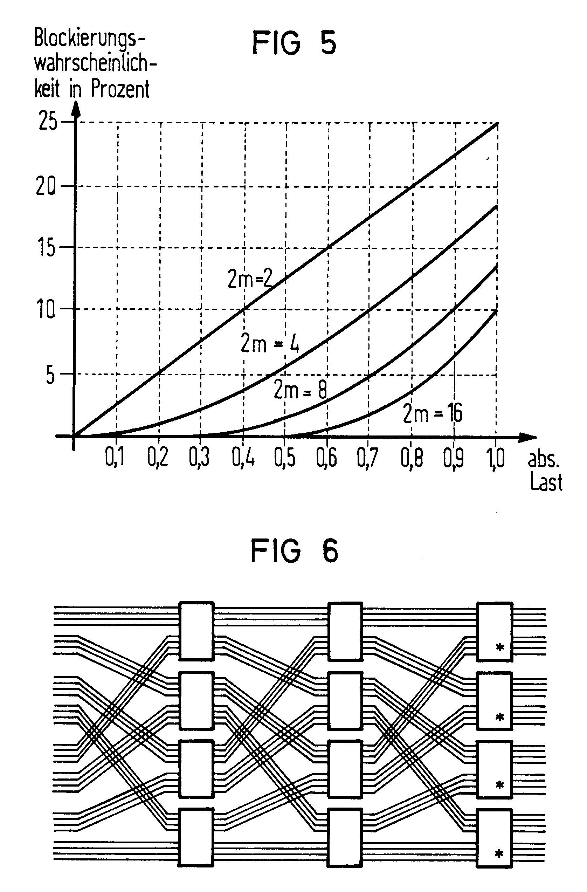

Um die Blockierungswahrscheinlichkeit möglichst gering zu halten, kann man anstelle von Beta-Elementen auch Sortiereinheiten (Sorter) mit 2m (m = 2er-Potenz) Ein- und Ausgangsleitungen verwenden. Die Sortiereinheiten werten wie die Beta-Elemente jeweils ein Bit der Adresse aus und leiten den Datenstrom je nach Adreßbit auf eine der oberen m oder eine der unteren m Ausgangsleitungen. Durch diese Maßnahme wird die Blockierungswahrscheinlichkeit im Banyan-Netzwerk herabgesetzt, vergl. Fig. 5. Die Verbindungsstrukturen im Banyan-Netzwerk müssen dabei in geeigneter Weise umsortiert werden. Das durch diese Änderung entstandene Netzwerk hat noch n-ld(m) Spalten, vergl. Fig. 6.

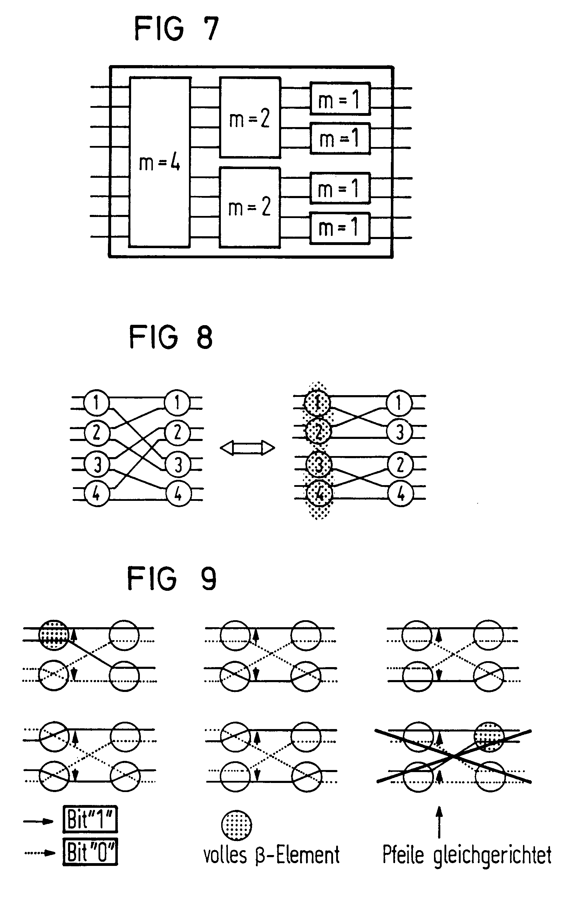

Die Sortiereinheiten der letzten Spalte unterscheiden sich von den übrigen Sortiereinheiten, da für jedes Paket nur eine Ausgangsleitung des Vermittlungsknotens (und damit der Sortiereinheit der letzten Beta-Elemente-Spalte) der lokalen Adresse des Pakets entspricht. Sie sind aus ld(m) + 1 Stufen aufgebaut, wobei die erste, zweite,...,ld(m) +1-te Stufe ausschließlich aus (den oben beschriebenen) Sortiereinheiten mit 2m, m,..., 2 Ein- und Ausgangsleitungen besteht. Wird in jeder Stufe ein Bit der Adresse ausgewertet, so wird das Paket auf den gewünschten Ausgang gesteuert (vergl. Fig. 7).

Die Sortiereinheit ist der eigentliche Gegenstand der vorliegenden Erfindung. Sie wird deshalb im folgenden ausführlich beschrieben.

Die Sortiereinheit ist ein Vermittlungsknoten, der aus dezentral arbeitenden Beta-Elementen und aus "Perfect Shuffles" besteht. Die Aufgabe des Vermittlungsknotens mit 2m Eingangsleitungen bestehen darin, asynchron ankommende Pakete je nach Bitwert auf eine der oberen und unteren m Leitungen zu steuern. Dabei dürfen bereits bestehende Verbindungen nicht verändert werden.

Der vorliegenden Erfindung liegt dabei folgende Überlegung zugrunde: Gleichmäßige Verteilung aller Pakete mit Bit "1" und aller Pakete mit Bit "0", so daß die Beta-Elemente in der letzten Spalte des Vermittlungsknotens höchstens ein Paket mit Bit "1" und höchstens ein Pakete mit Bit "0" erhalten. Pakete mit Bit "1" werden dann durch einen "Perfect Shuffle" nach oben, Pakete mit Bit "0" nach unten gesteuert.

Eine wesentliche Rolle im Aufbau der Sortiereinheit spielt eine besondere Eigenschaft des "Perfect Shuffle". Man kann im "Perfect Shuffle" alle Leitungen in Gruppen zu je vier Leitungen zusammenfassen, die dann jeweils zwei Beta-Elemente miteinander verbinden. Eine geeignete Umsortierung der Beta-Elemente soll dies an einem "Perfect Shuffle" mit 8 Leitungen verdeutlichen, vergl. Fig. 8. Von den vier Beta-Elementen, die zu einer Gruppe von Leitungen gehören, werden im folgenden die beiden linken Beta-Elemente als "zusammengehörend" bezeichnet. Bei "zusammengehörenden" Beta-Elementen werden die Beta-Elemente, die zwei Pakete mit Bit "1" weiterleiten als voll, die ein Paket mit Bit "1" weiterleiten als neutral und die kein Paket weiterleiten, als leer bezeichnet.

Ist von zwei "zusammengehörenden" Beta-Elementen mit entgegengesetzter Pfeilrichtung mindestens eines leer, so werden die mit diesen Beta-Elementen verbundenen Beta-Elemente beide nicht voll sein, vergl. Fig. 9. Dies ist bei gleichgerichteten Pfeilrichtungen nicht der Fall. Durch entgegengesetzte Pfeilrichtungen bei "zusammengehörenden" Beta-Elementen wird also sichergestellt, daß die Anzahl der vollen Beta-Elemente pro Spalte nicht zunimmt. In analoger Weise lassen sich die Definitionen von vollen und leeren Beta Elementen auch auf die Beta-Elemente übertragen, die Pakete mit Bit "0" weiterleiten. Die bisher gezogenen Schlußforderungen gelten in diesem Fall ebenso.

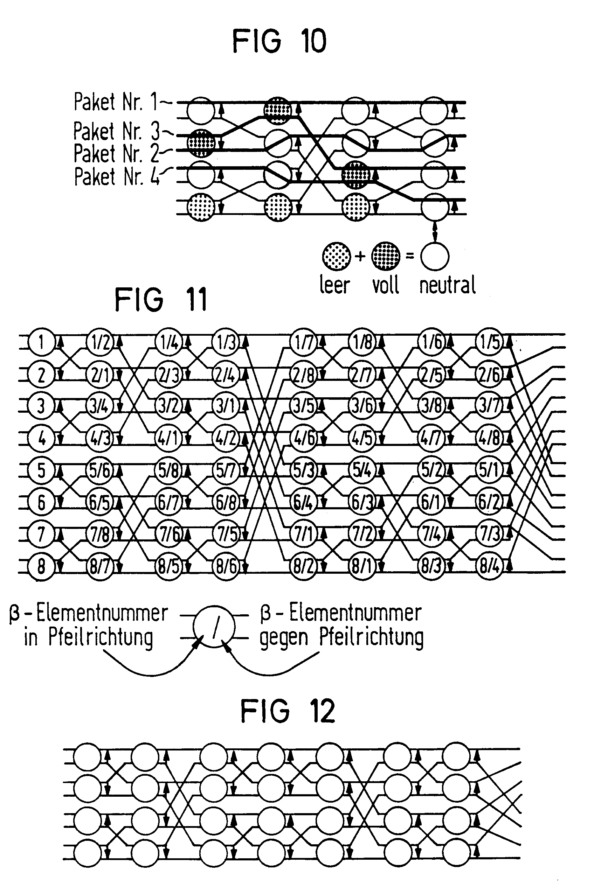

In Fig. 10 ist verdeutlicht, daß sich ein volles und ein leeres Beta-Element solange von Spalte zu Spalte "fortbewegen", bis sie in einer Spalte zueinandergehörende Beta-Elemente sind. In diesem Fall gehen beide Beta-Elemente in der nächsten Beta-Elemente-Spalte in den neutralen Zustand über. Ferner ist ersichtlich, daß sich die vollen Beta-Elemente entgegen der Pfeilrichtung "fortbewegen" und daß sich die leeren Beta-Elemente in Pfeilrichtung "fortbewegen".

Eine gleichmäßige Verteilung der Pakete in der letzten Spalte des Vermittlungsknotens erhält man demnach, wenn zwei beliebige Beta-Elemente der ersten Spalte folgende Bedingung erfüllen: "Verfolgt" man das eine Beta-Element in Pfeilrichtung und das andere gegen Pfeilrichtung, so müssen die Beta-Elemente in irgendeiner Spalte zueinandergehörende Beta-Elemente sein. Es gehen nämlich unter diesen Bedingung die vollen und die leeren Beta-Elemente in der nächsten Spalte in zwei neutrale Beta-Elemente über. Steuert der Knoten weniger Pakete mit Bit "1" als dafür vorgesehene Ausgangsleitungen, so gibt es in der ersten Spalte mehr leere als volle Beta-Elemente, also kann in der letzten Spalte kein volles Beta-Element mehr vorkommen).

Ein Beispiel für einen Vermittlungsknoten (mit 2m = 16 Eingängen), der die geforderte Bedingung erfüllt, ist in Fig. 11 gezeigt. Jedes Beta-Element trifft in jeder Spalte ein neues Beta-Element, also benötigt man mindestens m-1 Spalten für einen solchen Vermittlungsknoten. Zum Trennen der Pakete mit Bit "1" und Bit "0" benötigt man dann nur noch eine Beta-Elemente-Spalte. In Fig. 11 ist auch erkennbar, daß die Sortiereinheit mit 2m-Eingangsleitungen im wesentlichen aus vier Sortierern mit m Eingangsleitungen aufgebaut ist. Demnach liegt hier ein rekursiver Aufbau vor, der es erlaubt, Sortiereinheiten in jeder beliebigen 2-er-Potenzgröße aufzubauen.

Der Vermittlungsknoten gemäß Fig. 11 garantiert jedoch nur eine Trennung der Pakete mit Bit "1" und mit Bit "0" bei einmaliger Belegung der einzelnen Leitungen.

Um eine gute Funktionsweise der Sortiereinheit bei Verbindungsaufbau- und - abbau zu erreichen, werden die ersten m-1 Beta-Elemente-Spalten zusammen mit den dazugehörigen Verbindungsstrukturen vor der Sortiereinheit "kopiert", vergl. Fig. 12. Die neue Sortiereinheit mit 2m-1 Spalten erfüllt bei einer realistischen Last von bis zu 60% die geforderte Funktion annähernd zu einhundert Prozent.

Der besondere Vorteil des erfindungsgemäßen Schaltung besteht in dem einheitlichen Aufbau, der ausschließlich aus dezentral arbeitenden Beta-Elementen β besteht. Die maximale Taktrate der Schaltung wird im wesentlichen von den in den Beta-Elementen β enthaltenen Flip-Flops bestimmt. Diese beträgt in CMOS-VLSI Technik z. Z. ca. 40 MBit/s. Da der Vermittlungsknoten generell auf jede 2er-Potenz von Eingangsleitungen erweiterbar ist, erhält man ab 32 Eingangsleitungen des Vermittlungsknotens Übertragungskapazitäten im Gigabitbereich. Erfindungsgemäß können Speicher im Vermittlungsknoten entfallen. Bei statistisch verteilter Last bewirkt dies einen Verlust durch Blockierung von nur ca. 10⁻⁴ Paketen. Damit ist der Vermittlungsknoten vor allem zur Vermittlung von Paketen mit hohem Anteil an Bildfernsprech- und Sprachübertragung geeignet.

Die Beta-Elemente β können vorzugsweise in CMOS-Technik realisiert sein.

## Patentansprüche

1. Sortiereinheit für einen Vermittlungsknoten mit einer Vielzahl von digitalen Koppelfeldern für schnelle, asynchrone Datenpaketvermittlungsnetze, wobei der Vermittlungsknoten eine mehrstufige, gemischte Verbindungsstruktur, beispielsweise nach Art einer sog. Banyan-Baumstruktur, aufweist, die ein vollkommenes Bündel bildet, nämlich derart, daß jeder Eingang des Vermittlungsknotens mit jedem Ausgang desselben verbindbar ist,
dadurch **gekennzeichnet,**
- daß die digitalen Koppelfelder als selbststeuernde (self routing) Sortiereinheiten ausgebildet sind, die eine mehrstufige Durchschaltanordnung mit 2m-1 Beta-Element-Spalten zu je m Beta-Elementen (β) sind, wobei 2m die Anzahl der Eingänge bzw. der Ausgänge der Sortiereinheit ist und wobei m eine Zweierpotenz ist,
- daß die Sortiereinheit in eine erste, als Verteilungseinheit fungierende Untereinheit mit m Spalten und eine zweite als Korrektureinheit fungierende Untereinheit mit m-1 Spalten unterteilt ist,
- daß die Untereinheiten jeweils aus m kleinsten Einheiten bestehen, wobei jede kleinste Einheit jeweils vier Beta-Elemente (β) enthält, wobei jeweils zwei Beta-Elemente (β) ein Eingangspaar und jeweils zwei Beta-Elemente (β) ein Ausgangspaar bilden, welche Paare so miteinander verbunden sind, daß jeder Eingang des Eingangspaares mit jedem Ausgang des Ausgangspaares verbindbar ist,
- daß zwei erste kleinste Einheiten zu einem Eingangseinheitenpaar und zwei zweite kleinste Einheiten zu einem Ausgangseinheitenpaar zusammengefaßt sind, wobei diese Einheiten wiederum so miteinander verbunden sind, daß jeder der Eingänge des Eingangseinheitenpaares mit jedem der Ausgänge des Ausgangseinheitenpaares verbindbar ist usf.,
- daß die zweite, als Korrektureinheit fungierende Untereinheit durch Verschiebung um eine Spalte in die erste, als Verteilungseinheit fungierende Untereinheit hinein gebildet ist, so daß sich die Gesamtanzahl von 2m-1 Spalten ergibt, und
- daß nach der letzten, nämlich der 2m-1-ten Spalte eine Verbindungsstruktur zum Verbinden der Ausgänge der letzten Spalte mit einer nachfolgenden Gruppe von Koppelfeldern des Vermittlungsknotens vorgesehen ist, die eine ideale Mischung (perfect shuffle) darstellt.

2. Sortiereinheit nach Anspruch 1, dadurch **gekennzeichnet,** daß das Beta-Element (β) eine Speicherfunktion zum Halten des mit dem ersten eintreffenden Bit eines Datenpakets eingestellten Schaltzustands und eine Paketerkennungsfunktion zum Erkennen eines Datenpaketanfangs und eines Datenpaketendes aufweist und daß das Beta-Element (β) eine Vorzugsdurchschaltrichtung für das jeweils höherwertige Bit an einem seiner zwei Eingänge aufweist.

## Claims

1. Sorter for a switching node comprising a multiplicity of digital switching networks for fast asynchronous data packet switching networks, the switching node exhibiting a multi-stage mixed connecting structure, for example of the type of a so-called Banyan tree structure which forms a complete trunk group, in such a manner that each input of the switching node can be connected to each output thereof, characterised in that
- the digital switching networks are constructed as self-routing sorters which are a multi-stage switching arrangement with 2m-1 beta element columns of m beta elements (β) each, 2m being the number of inputs and outputs of the sorter and m being a power of two,
- the sorter is subdivided into a first subunit acting as distribution unit with m columns and a second subunit acting as correction unit with m-1 columns,
- the subunits in each case consist of m smallest units, each smallest unit in each case containing four beta elements (β), two beta elements (β) in each case forming an input pair and two beta elements (β) in each case forming an output pair, which pairs are connected to one another in such a manner that each input of the input pair can be connected to each output of the output pair,
- two first smallest units are combined to form an input unit pair and two second smallest units are combined to form an output unit pair, these units, in turn, being connected to one another in such a manner that each of the inputs of the input unit pair can be connected to each of the outputs of the output unit pair and so forth,
- the second subunit acting as correction unit is formed by displacement by one column into the first subunit acting as distribution unit so that the total number of 2m-1 columns is obtained, and
- after the last column, namely the 2m-1 th column, a connecting structure for connecting the outputs of the last column to a subsequent group of switching networks of the switching node is provided which represents a perfect shuffle.

2. Sorter according to Claim 1, characterised in that the beta element (β) exhibits a storage function for latching the switching state set with the first incoming bit of a data packet and a packet information function for recognising the start of the data packet and the end of a data packet and that the beta element (β) exhibits a preferential switching direction for the most significant bit in each case at one of its two inputs.

## Revendications

1. Unité de tri pour un noeud de commutation comportant une multiplicité de champs de couplage numériques pour des réseaux de commutation de paquets de données à fonctionnement rapide et asynchrone, le noeud de commutation comportant une structure de liaison mixte et à étages multiples, par exemple réalisée à la manière de ce qu'on appelle une structure arborescente de Banyan, qui forme un faisceau complet, et ce de telle sorte que chaque entrée du noeud de commutation peut être reliée à chaque sortie de ce même noeud, caractérisée par le fait
- que les champs de couplage numériques sont constitués en unités de tri à commande automatique (self routing), qui constituent un dispositif d'interconnexion à plusieurs étages ayant 2m-1 colonnes d'éléments bêta comportant chacune m éléments bêta (β), 2m étant le nombre d'entrées ou de sorties de l'unité de tri et m étant une puissance de deux,
- que l'unité de tri est divisée en une première sous-unité fonctionnant en tant qu'unité de répartition et comportant m colonnes, et une seconde sous-unité fonctionnant en tant qu'unité de correction et comportant m-1 colonnes,
- que les sous-unités sont constituées chacune de m unités très petites, chaque unité très petite contenant respectivement quatre éléments bêta (β), deux éléments bêta (β) formant un couple d'entrées et deux éléménts bêta (β) formant un couple de sorties, lesdits couples étant reliés entre eux de sorte que chaque entrée du couple d'entrées est reliée à chaque sortie du couple de sorties,
- que deux premières unités très petites sont réunies pour former un couple d'unités d'entrée et que deux secondes unités très petites sont réunies pour former un couple d'unités de sortie, ces unités étant à nouveau reliées entre elles de telle sorte que chacune des entrées du couple d'unités d'entrée peut être reliée à chacune des sorties du couple d'unités de sortie, etc.,
- que la deuxième sous-unité, qui fonctionne en tant qu'unité de correction, est formée par décalage d'une colonne dans la première sous-unité fonctionnant en tant qu'unité de répartition, de sorte qu'on obtient le nombre total de 2m-1 colonnes, et
- qu'après la dernière, à savoir la 2m-1-ème colonne, il est prévu une structure de liaison servant à relier les sorties de la dernière colonne à un groupe suivant de champs de couplage du noeud de commutation, qui représente un mélange idéal (perfect shuffle).

2. Unité de tri suivant la revendication 1, caractérisée par le fait que l'élément bêta (β) comporte une fonction de mémoire pour la conservation de l'état de commutation réglé avec le premier bit d'un paquet de données arrivant, et une fonction d'identification de paquets pour identifier un début de paquet de données et une fin de paquet de données, et que l'élément bêta (β) comporte, au niveau de l'une de ses deux entrées, une direction préférée d'interconnexion pour le bit de poids le plus élevé.
